# EUROPEAN PATENT APPLICATION

(11) **EP 3 819 260 A1**
(43) Date of publication of application: **12.05.2021**
(21) Application number: 19207811.1
(22) Date of filing: 07.11.2019
(51) Int. Cl.: C01B 32/168, C01B 32/194, G01N 27/12, B82Y 30/00, B82Y 40/00, G01N 27/414

(54) **A COMPOSITE MATERIAL, A CHEMORESISTIVE GAS SENSOR, A CHEMORESISTIVE GAS SENSOR SYSTEM AND A METHOD FOR MAKING AND USING SAME**

(71) Applicant: Infineon Technologies AG, 85579 Neubiberg (DE)
(72) Inventor: ROTH, Alexandra Marina, 92318 Neumarkt (DE); ZÖPFL, Alexander, 93049 Regensburg (DE)
(74) Representative: König, Andreas Rudolf

(57) **Abstract**

According to an embodiment, a chemoresistive gas sensor comprises a composite material and an electrode structure electrically coupled to the composite material. According to an embodiment, the composite material comprises a graphene material, a carbon nanotube material and a metal-containing material. The metal-containing material may include metal-containing particles such as metal-containing nanoparticles.

## Description

Embodiments relate to a composite material, a chemoresistive gas sensor, a chemoresistive gas sensor system, and methods for making and using same. The composite material may be used as a gas sensing material.

Sensing or detecting gases in the environment selectively may include using sensing materials with chemoresistive properties or a chemoresistive material. A chemical interaction and/or reaction between the sensing material and the gas to be detected may result in a change in the properties, for example electrical properties, of the sensing material. A sensing material with chemoresistive properties may change its resistance and respectively its conductance as the concentration of the gas to be detected changes.

There is a need for improving the sensitivity of a sensing material in a chemoresistive gas sensor and/or in a chemoresistive sensor.

According to an embodiment of the present invention, a chemoresistive gas sensor comprises a composite material and an electrode structure electrically coupled to the composite material. In an embodiment, the gas sensor may be configured to selectively detect predefined gases. The composite material may comprise a graphene material, a carbon nanotube material and a metal-containing material. The metal-containing material may comprise at least one metal element from the Periodic Table of Elements. The at least one metal element may comprise at least one noble metal element. The at least one metal element may comprise at least one transition metal element. The chemoresistive gas sensor may be a MEMs device.

An embodiment of the present invention is a method for manufacturing a chemoresistive gas sensor. The method comprises providing an ink material. The material comprises a composite material. The composite material includes a graphene material, a carbon nanotube material and a metal-containing material.

An embodiment of the present invention is a method of detecting a gas, comprising: forming a composite material, the composite material including a graphene material, a carbon nanotube material, and a metal-containing material, causing the cosposite material to adsorb the gas; and causing the composite material to desorb the gas.

As used herein "conductive material" refers to an electrically conductive material unless otherwise stated.

Further embodiments are defined in the dependent claims.

Embodiments are described herein making reference to the appended drawings, in which:
- Fig. 1a: shows a cross sectional of a chemoresistive gas sensor according to an embodiment;
- Fig. 1b: shows a top view of a chemoresistive gas sensor according to an embodiment;
- Fig. 2: shows a chemoresistive gas sensor according to an embodiment;
- Fig. 3: shows a schematic representation of a composite material according to an embodiment comprising a graphene material, a carbon nanotube material and a metal-containing material;
- Fig. 4a: shows a functionalized graphene material comprising metal-containing material and graphene flakes;
- Fig. 4b: shows production steps of manufacturing a carbon nanotube material from a graphene sheet material;
- Fig. 4c: shows a composite material comprising metal-containing material, graphene material and carbon nanotube material;
- Fig. 4d: shows schematic illustrations of production steps of manufacturing printable carbon ink according to an embodiment;
- Fig. 4e: shows schematic illustrations of production steps of manufacturing printable carbon ink according to an embodiment;
- Fig. 5: shows a diagram comparing composite materials with and without a carbon nanotube material;
- Fig. 6a: shows an overview table of gas concentrations used in the air quality index;
- Fig. 6b: shows a diagram about signals of a multi-gas sensor according to an embodiment with four chemoresistive gas sensors;
- Fig. 7: shows a cross-sectional view of a gas sensing system according to an embodiment of the present invention; and
- Fig. 8: shows an embodiment of a method of detecting a gas using a composite material according to an embodiment of the present invention.

Equal or equivalent elements or elements with equal or equivalent functionality are denoted in the following description by equal or equivalent reference numbers even if occurring in different figures.

As the position and/or the direction of a chemoresistive gas sensor and/or chemoresistive sensor may be changed, certain words describing positions and/or directions, such as top, bottom, on, over, below, left, right etc., in the current disclosure shall not be understood as limiting the embodiments described herein to those positions, directions respectively.

In the following description, a plurality of details is set forth to provide a more thorough explanation of embodiments. However, it will be apparent to those skilled in the art that embodiments may be practiced without these specific details. In other instances, well-known structures and devices are shown in a schematic representation rather than in detail in order to avoid obscuring embodiments. In addition, features of the different embodiments described herein or below may be combined with each other, unless specifically noted otherwise.

The present disclosure is understood more fully from the detailed description given below, and from the accompanying drawings of embodiments, which are not to be taken to limit the present invention to the specific embodiments described, but are for explanation and understanding only.

In the following, reference may be made to measuring an environmental parameter. Some embodiments may be directed to measure a concentration of a specific gas and/or a presence of a specific substance or material in a gas. Such measurements may be performed by use of a chemoresistive gas sensor and/or a chemoresistive gas sensor system.

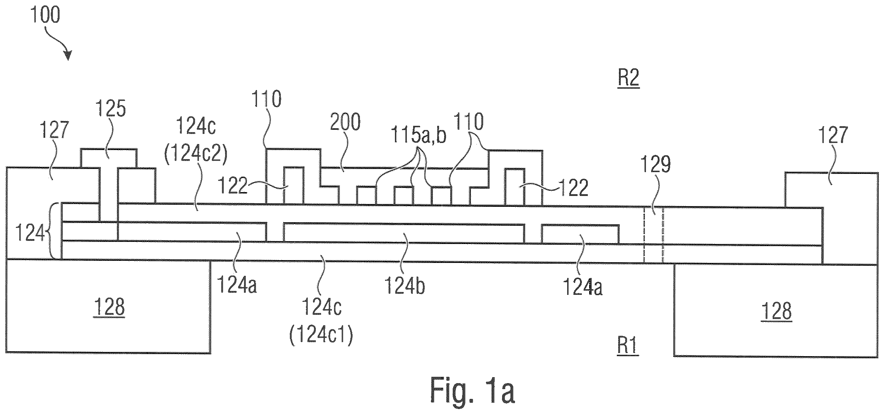

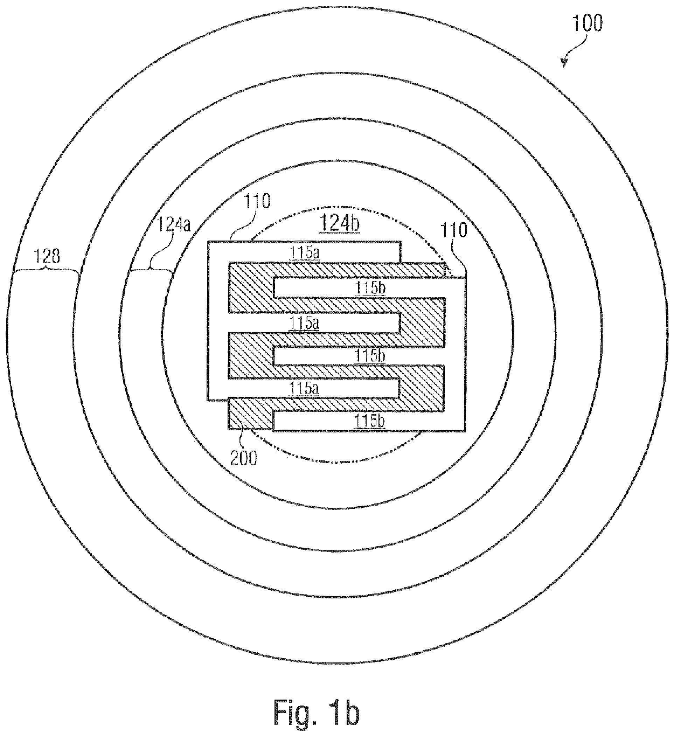

FIG. 1a shows a side cross sectional view of an embodiment of a chemoresistive gas sensor 100 of the present invention. FIG. 1b shows a top view of an embodiment of a chemoresistive gas sensor 100 of the present invention. In one or more embodiments, the chemoresistive gas sensor 100 may be a MEMS gas sensor.

The chemoresistive gas sensor 100 may comprise an electrode structure 110 including electrodes 115a,b. Generally, the electrode structure as well as the electrodes may be different types of formations. In the embodiment shown in FIGS. 1a, 1b, the electrodes 115a,b may have an interdigitated formation and be referred to as interdigitated electrodes 115a,b. From the top view shown in FIG. 1b, it is seen that the electrode 115a may have at least one (or a plurality) of fingers. Likewise, the electrode 115b has at least one (or a plurality) of fingers.

The electrode structure 110 may be electrically coupled to a composite material 200. The composite material 200 may serve as a gas sensing material for the gas sensor 100. The composite material 200 may be disposed, for example, over (or directly on) the interdigitated electrodes 115a,b. The composite material 200 may be disposed above and/or between the interdigitated electrodes 115a,b. The composite material 200 may be disposed directly on the top and/or sidewall surfaces of the interdigitated electrodes 115a,b. FIG. 1b shows an example of the interdigitated formation of the electrodes 115a,b. Referring to FIG. 1b, the composite material 200 is shown between the electrodes 115a,b. However, in an embodiment, the composite material may also be above (for example, directly on top of) the electrodes 15a,b.

The electrode structure 110 may comprise a conductive material. The conductive material may comprise a metallic material. The metallic material may, for example, comprise a pure metal and/or an alloy and/or a metallic compound. It is understood, that any pure metal may include traces of impurities. For example, the metallic material may include pure copper, copper alloy, copper compound, pure gold, gold alloy, gold compound, pure aluminum, aluminum alloy, aluminum compound. The conductive material may include a non-metallic material such as a doped semiconductor material. For example the conductive material may include a doped polysilicon material.

The composite material 200 may comprise a graphene material, a carbon nanotube material and a metal-containing material. The metal-containing material may include at least one metal element from the Periodic Table of Elements. The composite material 200 may serve as a gas sensing material for the gas sensor 100. The composite material 200 is discussed in more detail below.

The composite material 200 may be at least partially surrounded (or fully surrounded) by limiting wall(s) 122. The limiting wall(s) 122 may comprise a dielectric material such as an oxide and/or a nitride. The limiting walls may be used to limit the spread of ink in the case that the composite material 200 may be formed by a printing process such as an ink jet printing process. The limiting wall(s) 122 may thus at least partially (or fully) laterally surround the composite material 200. The limiting wall(s) 122 may, for example, be formed as a loop-shaped wall (such as an annularly shaped wall). The limiting wall(s) is/ are not shown in FIG. 1b.

The chemoresistive gas sensor 100 may further comprise a heating structure 124. The heating structure 124 may include a heating element 124a. The heating element 124a may be thermally coupled to the composite material 200. The heating element 124a may provide energy such as thermal energy and/or infrared energy. For example, the heating structure may provide energy (e.g. thermal energy and/or infrared energy) to the composite material. The heating element may, for example, have a loop shape such as an annular shape. The heating element 124a may comprise a conductive material. The conductive material may comprise a metallic material. The metallic material may comprise a pure metal and/or an alloy and/or a compound. The heating element may comprise, for example, a material including at least one element of the Periodic Table of Elements selected from the group consisting of Ag, Cu, Au, Al, W, Fe, Pt, Pb and combination thereof. The material for the heating element may be a pure metal and/or an alloy and/or a compound. The conductive material of the heating element may comprise a non-metallic material such as a doped polysilicon material. In an embodiment, it may be possible that the heating element comprise a non-conductive material such as an oxide and/or a nitride.

The heating structure 124 may further include a heat distribution element 124b. The heat distribution element 124b may be thermally coupled to the heating element 124a. The heating element 124a may at least partially surround the heat distribution element. The heat distribution element 124b may comprise a thermally conductive material. The heat distribution element 124B may comprise an electrically conductive material. The electrically conductive material may comprise a metallic material. The metallic material may comprise a pure metal and/or an alloy and/or a compound. The conductive material may comprise a non-metallic material such as a doped polysilicon material. In an embodiment, it is possible that the heat distribution element 124b comprises a non-conductive material such as, for example, an oxide and/or a nitride.

The heating element 124a and/or the heat distribution element 124b may be embedded in a dielectric layer 124c. The dielectric layer 124c may include a first dielectric layer 124c1 and a second dielectric layer 124c2. The dielectric layers 124c1 and/or 124c2 may comprise a silicon nitride material. The heating structure 124 may include an opening 129 so there is gasous communication between region R1 and region R2 illustrated in Fig. 1a.

In an embodiment, the heating structure 124 may be disk-shaped. A disk-shaped heating structure 124 may help to reduce the heat losses of the heating structure 124 to help provide a faster heating of the composite material 200. The disk-shaped heating structure may have a circular shape. The disk-shaped heating structure may have the shape of a polygon such as, without limitation, triangular, rectangular, pentagonal, hexagonal, etc. In one or more embodiments, the disk-shaped heating structure may be irregularly shaped.

The heating structure may have a small height in comparison to its lateral cross section. For example, in one or more embodiments, the height may be less than 0.1 times the lateral cross section. In one or more embodiments, the heights may be less than 0.01 times the lateral cross section.

The heating element 124a may increase the temperature of the composite material 200 in order to enhance the adsorption and/or desorption of the gases which are to be detected by the gas sensor 100.

In an embodiment, the heating structure 124 may have a linear temperature coefficient of resistance (TCR), at least within a temperature range of interest. For example, such a temperature range of interest may be arranged below maximum temperatures of the heating structure 124. For example, the maximum temperature for the heating structure may be a temperature selected from the group consisting of 200°C, 150°C and 100°C. In an embodiment, the maximum temperature of the heating structure may be chosen as 100°C.

In an embodiment, the heating element 124a may laterally surround (partially or completely) the heat distribution element 124b. In an embodiment, the heating element 124a may completely laterally surround the heat distribution element 124a.

In an embodiment, the heat distribution element may underlie (partially or completely) the composite material 200.

In other embodiments, the heating element 124a and/or the heating distribution element 124b may be located in a different location.

The chemoresistive gas sensor 100 may further include a substrate 128. The substrate 128 may be a semiconductor substrate. The semiconductor substrate may be a silicon substrate. The substrate 128 may have an opening 129 formed therethrough. The opening 129 may be formed in a central portion of the substrate. The opening 129 may correspond to the region R1. Creation of the opening 129 removes a central portion of the substrate 128. Removing a central portion of the substrate helps to remove a heat sink that would, if present, draw thermal energy from the heating structure 124.

Still referring to the embodiment of FIG. 1a, the substrate 128 may provide a support for the heating structure 124 and/or the electrode structure 110 and/or the composite material 124. The heating structure 124 may overlie (partially or completely) the substrate. In an embodiment, the heating structure may be formed directly on the substrate. The heating structure 124 may provide a support for the electrode structure 110. The electrode structure 110 may be formed over the heating structure 124. In an embodiment, the electrode structure 110 may be formed directly on the heating structure. As noted above, the composite material 200 may be formed over the electrodes 115a,b. For example, it may be formed over the top and sidewall surfaces of the electrodes 115a,b so as to be above and between the electrodes 115a,b. In an embodiment, the composite material 200 be formed directly on the electrodes 115a,b. It is noted that, in one or more embodiments, the composite material 200 may form an electrically conductive pathway between the electrode 115a and the electrode 115b.

The chemoresistive gas sensor 100 may be configured to selectively detect gases. The chemoresistive gas sensor may detect a change in the electrical resistance (or resistivity) of the composite material 200 due to an interaction with certain gases. Such a change in resistance may be at least 50%, at least 100% or at least 200% higher in comparison to the change in resistance (or resistivity) of a material that is insensitive to the same certain gases.

Different types of gases may be detected. An example of a gas to be detected (also referred to as the target gas) may be, for example, carbon monoxide (e.g. CO), carbon dioxide (e.g. CO₂), hydrogen (e.g. H₂), ethanol or methanol. In one or more embodiments, the gas may be a reducing gas. The gas to be detected may interact with the composite material. The interaction may include an adsorption process. The adsorption process may include physical adsorption and/or chemical adsorption. In one or more embodiments, the adsorption process may include physical adsorption and chemical adsorption. Such interaction may change the resistance (or resistivity) of the composite material 200.

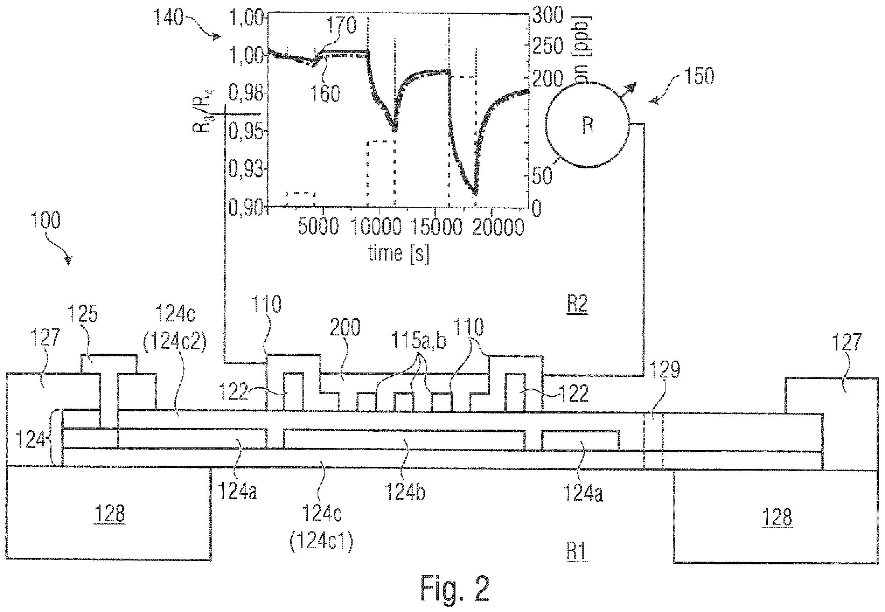

FIG. 2 shows a chemoresistive gas sensor 100. Referring to Fig. 2, the chemoresistive gas sensor 100 may be electrically coupled to a resistance measuring instrument 150. Referring to FIG. 2, the graph 140 shows that, as the concentration of the gas (ordinate on the right) changes with time (abscissa), and the curve 170 of the electrical resistance of the composite material and/or the relative electrical resistance (ordinate on the left) of the composite material changes in a like manner with the curve 160 of the concentration of the gas to be detected. In one or more embodiments, the gas sensor 100 may detect a gas with a sensitivity of less than or equal to 1 ppm, 400 ppm, or 1000 ppm. For example, the chemoresistive gas sensor 100 may selectively detect a CO-gas with a concentration of less than, or equal to 1 ppm, 400 ppm, or 1000 ppm.

As noted, the composite material 200 may be electrically coupled to an electrode structure 110. The electrode 115a may be electrically coupled to one terminal while the electrode 115b may be electrically coupled to an opposite terminal. In an embodiment, an electrical current may flow through the composite material 200 while voltage is measured across one of the electrodes (for example, 115a) and the other electrode (for example, 115b) or while a voltage is provided between the electrodes 115a, 115b an electrical current flowing through the composite material 200 may be measured. Hence, an electrical resistance (or resistivity) may be measured. The resistance (or resistivity) of the composite material 200 may change when it is exposed to certain gases to be detected and/or when there is a concentration change of these certain gases to be detected.

As noted above, the composite material of the present invention may comprise a graphene material, a carbon nanotube material and a metal-containing material. The metal-containing material may include at least metal element from the Periodic Table of Elements.

The graphene material may be in the form of graphene flakes.

In an embodiment, the carbon nanotube material may be single-wall carbon nanotubes. In an embodiment, the carbon nanotube material may be multiple-wall carbon nanotubes.

The metal-containing material may comprise at least one metal element from the Period Table of Elements. The at least one metal element may be a plurality of metal elements. The at least one metal element may include at least one noble metal element from the Period Table of Elements. The at least one metal element may include at least transition metal element. The at least one metal element may be in the form of a neutral atom and/or in the form of a positive ion and/or negative ion.

The metal-containing material may comprise a pure metal and/or an alloy (e.g. a metallic alloy) and/or a metal-containing compound. It is understood that a pure metal may include traces of impurities.

The metal-containing material may include the elements Pd (palladium) and/or Pt (platinum) and/or Ni (nickel) and/or Zn (zinc). The metal-containing material may comprise (or consist essential of) pure palladium and/or palladium alloy and/or palladium compound. The metal-containing material may comprise (or consist essentially of pure platinum and/or platinum alloy and/or platinum compound. The metal-containing material may include (or consist essentially of) metal oxide. In an embodiment, the metal-containing material may include a metal oxide such as palladium oxide and/or platinum oxide and/or nickel oxide and/or zinc oxide and/or tin oxide (such as SnO₂). In one or more embodiments, it may be possible that the metal-containing material may comprise a metal nitride.

The metal-containing compound may be a metallic compound. The metal-containing compound may be a non-metallic material.

The metal-containing compound may comprise at least one metal chalcogenide. A metal-chalcogenide may include at least one chalcogen element. The chalogen element may, for example, include an element from group 16 of the Periodic Table of Elements. In an embodiment, the chalcogen elements may include at least the elements O (oxygen), S (sulfer), Se (selenium), Te (tellurim), and Po (polonium). The metal chalogenides may, for example, include metal oxides and/or metal sulfides and/or metal selenides and/or metal tellurides and/or metal polonides.

The metal-containing compound may comprise at least one metal salt. For example, the metal salt may comprise a palladium salt and/or a platinum salt. Another examples of a metal salt is a metal chloride such as a palladium chloride and/or a platinum chloride and/or a tin chloride (for example, SnCI)

The metal-containing compound may comprise at least one metal complex. Example of a metal complex is a porphyrin. An example of a porphyrin is platinum porphyrin. Another example is palladium porphyrin.

The metal-containing material may be substantially homogeneously distributed in the composite material. The metal-containing material may be substantially homogeneously distributed directly on the surfaces of the graphene material and/or the nanotube material. The metal-containing material may be in direct contact with the graphene material and/or the carbon nanotube material. The metal-containing material may be directly on the graphene material and/or the carbon nanotube material.

The metal-containing material may comprise a plurality of metal-containing particles. In one or more embodiments, the particles may have a size less than or equal to about 200 nanometers. In one or more embodiments, the particles may have a size less than or equal to about 175 nanometers. In one or more embodiments, the particles may have a size less than or equal to about 150 nanometers. In one or more embodiments, the particles may have a size less than or equal to about 125 nanometers. In one or more embodiments, the particles may have a size less than or equal to about 100 nanometers. In one or more embodiments, the particles may have a size less than or equal to about 75 nanometers. In one or more embodiments, the particles may have a size less than or equal to about 50 nanometers. In one or more embodiments, the particles may have a size less than or equal to about 30 nanometers. In one or more embodiments, the particles may have a size less than or equal to about 20 nanometers. In one or more embodiments, the particles may have a size less than or equal to about 10 nanometers.

In one or more embodiments, the particles may have a particle size greater than or equal to about .5 nanometers.

In one or more embodiments, the particles may have a particle size less than or equal to about 200 nanometers but greater than or equal to about .5 nanometers. In one or more embodiments, the particles may have a particle size less than or equal to about 175 nanometers but greater than or equal to about .5 nanometers. In one or more embodiments, the particles may have a particle size less than or equal to about 150 nanometers but greater than or equal to about .5 nanometers. In one or more embodiments, the particles may have a particle size less than or equal to about 125 nanometers but greater than or equal to about .5 nanometers. In one or more embodiments, the particles may have a particle size less than or equal to about 100 nanometers but greater than or equal to about .5 nanometers. In one or more embodiments, the particles may have a particle size less than or equal to about 75 nanometers but greater than or equal to about .5 nanometers. In one or more embodiments, the particles may have a particle size less than or equal to about 50 nanometers but greater than or equal to about .5 nanometers. In one or more embodiments, the particles may have a particle size less than or equal to about 30 nanometers but greater than or equal to about .5 nanometers. In one or more embodiments, the particles may have a particle size less than or equal to about 20 nanometers but greater than or equal to about .5 nanometers. In one or more embodiments, the particles may have a particle size less than or equal to about 10 nanometers but greater than or equal to about .5 nanometers.

The metal-containing material may comprise a plurality of metal-containing particles. The particles may comprise nanoparticles. In one or more embodiments, the nanoparticles may have a particle size less than or equal to about 100 nanometers. In one or more embodiments, the nanoparticles may have a particle size less than or equal to about 75 nanometers. In one or more embodiments, the nanoparticles may have a particle size less than or equal to about 50 nanometers. In one or more embodiments, the nanoparticles may have a particle size less than or equal to about 30 nanometers. In one or more embodiments, the nanoparticles may have a particle size less than or equal to about 20 nanometers. In one or more embodiments, the nanoparticles may have a particle size less than or equal to about 10 nanometers. In one or more embodiments, the nanoparticles may have a particle size great than or equal to about .5 nanometers.

In one or more embodiments, the nanoparticles may have a particle size greater than or equal to about .5 nanometers.

In one or more embodiments, the nanoparticles may have a particle size less than or equal to about 100 nanometers but greater than or equal to about .5 nanometers. In one or more embodiments, the nanoparticles may have a particle size less than or equal to about 75 nanometers but greater than or equal to about .5 nanometers. In one or more embodiments, the nanoparticles may have a particle size less than or equal to about 50 nanometers but greater than or equal to about .5 nanometers. In one or more embodiments, the nanoparticles may have a particle size less than or equal to about 30 nanometers but greater than or equal to about .5 nanometers. In one or more embodiments, the nanoparticles may have a particle size less than or equal to about 20 nanometers but greater than or equal to about .5 nanometers. In one or more embodiments, the nanoparticles may have a particle size less than or equal to about 10 nanometers but greater than or equal to about .5 nanometers.

The particles (such as the nanoparticles) may be regularly and/or irregular shaped.

The particles (for example, the nanoparticles) may comprise any of the materials discussed herein regarding the metal-containing material. For example, the particles may comprise a pure metal and/or a metal alloy and/or a metal-containing compound. The particles may be metallic and/or non-metallic. Examples include, but not limited to, pure palladium and/or pure platinum and/or palladium alloy and/or platinum alloy. In one or more embodiments, the particles may include metal oxide. In one or more embodiments, it may be possible that the particles includes a plurality of materials. In one or more embodiments, it may be possible that a single particle includes a plurality of materials.

The particles (for example, the nanoparticles) may be substantially homogeneously distributed in the composite material. In one or more embodiments, the particles may be in electrical contact with the graphene and/or nanotube material. In one or more embodiments, the particles may be in direct contact with the graphene and/or the carbon nanotubes. In one or more embodiments, the particles may be disposed directly on the graphene material and/or the nanotube material. The particles may be substantially homogeneously distributed directly on the graphene material and/or the carbon nanotube material.

In one or more embodiments, the metal-containing material may be in the form of a metal-containing material layer. The metal-containing material layer may be in electrical contact with the graphene material and/or the carbon nanotube material. In one or more embodiments, the metal-containing material layer may be disposed directly on the graphene material and/or the carbon nanotube material. In one or more embodiments, the metal-containing material layer be may be substantially homogeneously distributed in the composite material.

In one or more embodiments, the metal-containing material layer may comprise any of the materials discussed herein with regards to the metal-containing material. For example, in one or more embodiments, the metal-containing material layer may comprise a pure metal and/or a metal alloy and/or a metal-containing compound. For example, in one or more embodiments, the metal-containing material layer may comprise a metal chalcogenide and/or a metal salt and/or a metal complex.

In one or more embodiments, the metal-containing material layer may have a thickness less than about 200 nanometers. In one or more embodiments, the metal-containing material layer may have a thickness less than about 150 nanometers. In one or more embodiments, the metal-containing material layer may have a thickness less than about 100 nanometers.

In one or more embodiments, the composite material may have a minimum composition mass ratio of graphene material to carbon nanotube material of 1:0.005 and a maximum composition mass ratio of 1:0.5 and/or a minimum composition mass ratio of graphene material to metal containing material of 1:1 and a maximum composition mass ratio of 1:20.

For example, a chemoresistive sensing layer or a chemoresistive gas sensor 100, made of a composite material comprising, for example, graphene material, carbon nanotube material (CNT) and a metal-containing material (such as, for example, a metal salt) may enable a selective detection of, for example, a CO gas with a concentration with less than or equal to 1 ppm, 400 ppm, or 1000 ppm. For example, a composite material 200 targeting a CO-gas may comprise Pd-salts, graphene-flakes and carbon nanotubes. The usage of carbon nanotubes (CNTs) and the Pd-salts results in a high CO sensitivity, thus enabling measuring the CO concentration in air in a measurement range defined by air quality.

It may be possible that the use of metal-containing material, graphene material and carbon nanotube materials in the composite material may improve the sensitivity of the chemoresistive gas sensor 100 described, for example, in Figs. 1a,b. Selective detection of gases, for example CO, may have a sensitivity of less than or equal to 1 ppm, 400 ppm, or 1000 ppm.

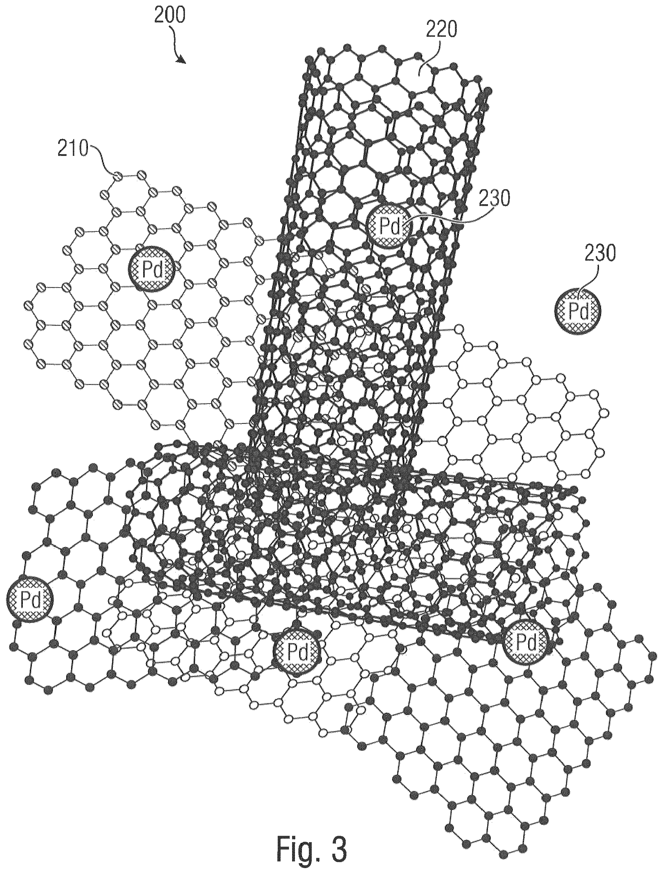

Fig. 3 shows a schematic representation of an embodiment of a composite material 200 of the present invention. The composite material 200 comprises a graphene material 210, a carbon nanotube material (CNT) 220 and a metal-containing material 230.

One aspect of the composite material 200 is an interaction of the graphene material with the carbon nanotube and/or metal-containing materials (which may be in the form of particles such as nanoparticles). For example, using graphene flakes as base material, CNTs and palladium-salts, such as palladium acetate, may result in a CO-sensitive composite material, which may change its electrical properties due to adsorbing CO. An adsorption of a certain gas on a thin graphene film may cause charge-transfer to graphene. The charge carrier density shift into graphene may change sheet resistance.

Furthermore, the carbon nanotubes may influence the material for different reasons:
- Carbon nanotubes may have a higher reactivity than, for example, the graphene material, thus resulting in a different bond energy between the carbon nanotubes and the gas to be measured (the target gas) than what exists between the graphene material and the gas to be measured. In this case, the presence of the carbon nanotubes may have a positive impact on the detection of the gas to be measured (such as a carbon monoxide (CO) gas).
- Furthermore, the carbon nanotubes may improve the charge transfer of the composite material. For example, a mix of carbon nanotubes in combination with graphene flakes may have a higher charge transfer than the graphene flakes without the carbon nanotubes.
- The composite material with the carbon nanotubes may have an increased surface area than a composite material without the carbon nanotubes. The increased surfaces area may provide more surface to interact with the target gas. This may provide for increased sensitivity.
- The composite material with graphene flakes and carbon nanotubes may have an improved charge transport.
- The surface energy of a carbon nanotube and graphene material matches the gas to be detected (the target gas), like CO, better than graphene alone.

The sensitivity of a chemoresistive gas sensor 100 in Figs. 1a,b may thus be improved by using a graphene material (such as graphene flakes) with carbon nanotubes The carbon nanotubes with the graphene flakes may thus improve the composite material by improving the surface area. The use of metal-containing materials, such as metal-containing particles (such as nanoparticles) and/or metal-containing material layers (such as, for example metal salts and/or metal complexes), may also improve the charge transfer and bond energy of the composite material.

The composite material of the present invention may be formed as an ink material. For example, it may be formed as a printable carbon-based ink which may deposited onto the electrodes (so as to, for example, cover the electrodes 115a,b). After the ink (which includes the composite material) is deposited, the ink may be dried out (e.g. the ink solvent may be evaporated). The remains of the ink may form the composite material 200 at least partly or completely. An embodiment of the composite material 200 is shown in FIG. 3. The composite material 200 may comprise graphene flakes 210, carbon nanotube material 220 and metal-containing particles 230 (such as metal-containing nanoparticles). It is noted that while the metal-containing particles 230 are shown as palladium particles in the embodiment of FIG. 3, the particles 230 may be any metal-containing particles as described herein. The particles 230 may comprise one or more of any of the materials described herein for the metal-containing material. The composite material 200 may have the functionality to detect certain gases in low concentrations (for example, in the ppb and/or the ppm ranges).

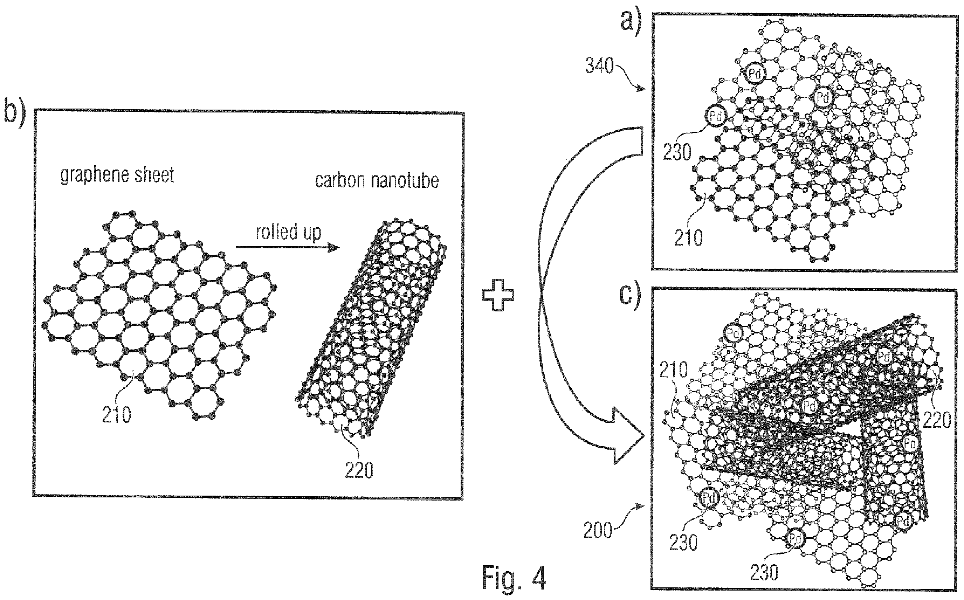

Figs. 4a-e show an embodiment of schematic illustrations of steps that may be executed during a production of a printable carbon-based composite material which may have the functionality to detect certain gases in low concentrations (for example, in the ppb and/or the ppm regions).

Fig. 4a shows a schematic representation of the graphene material 210 being modified by the addition of a metal-containing material such as metal-containing particles (such as metal-containing nanoparticles). The modified material may be referred to a modified carbon-based material 340 and may comprise the graphene material (for example, in the form of graphene flakes) and the added metal-containing material (for example, in the form of particles such as nanoparticles 230). It may comprise, for example, graphene flakes 210 with particles 230 in between. It is noted that while the metal-containing particles 230 are shown as palladium particles in the embodiment of FIG. 4a, the particles 230 may be any metal-containing particles as described herein. The particles 230 may comprise one or more of any of the materials described herein for the metal-containing material. In one or more embodiments, it is possible that other forms of metal-containing materials (e.g. having a form other than particles) may be added to the graphene material to form other forms of a modified carbon-based material.

Carbon nanotubes may be added to the modified carbon-based material 340 to form a composite graphene material 200. The addition of the carbon nanotubes may provide a composite material 200 with increased in gas sensitivity. The addition of the carbon nanotube may increase the surface area of the modified material. The composite material 200 including the graphene flakes 210, the nanoparticles 230 and the carbon nanotubes 220 is shown in FIG. 4c.

Fig. 4b shows a possible way for production of a carbon nanotube 220. For example, a single graphene sheet 210 may be rolled up into a carbon nanotube 220. The carbon nanotubes may be single-walled or may be multi-walled (e.g. having a plurality of walls). A plurality of carbon nanotubes may be added to the graphene material described in Fig. 4a to form a modified carbon-based material. The metal-containing material (for example, particles such as nanoparticles) may then be added to the modified carbon-based material to form a composite material 200, which is shown in Fig. 4c, comprising a graphene material 210, a metal-containing material 230 (which may be particles such as nanoparticles) and a carbon nanotube material 220.

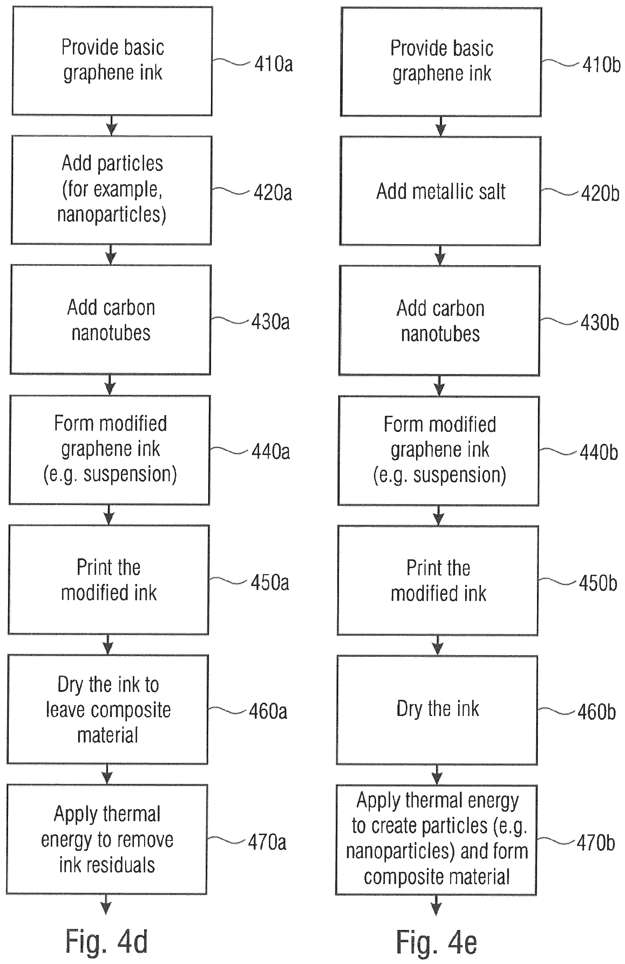

Fig 4d shows an block diagram of a process for making a composite material according to an embodiment described herein. Step 410a shows that a basic graphene ink may be provided. The basic graphene ink may include a graphene material. As noted above, the basic graphene ink may comprise graphene flakes in a solvent. The solvent may be an organic solvent such as N-Methylpyrrolidone or ethylene glycol.

Step 420a shows that metal-containing particles (for example, nanoparticles) may be added to the basic graphene ink. As mentioned above, the added particles may include, without limitation, any of the materials described herein. After adding the metal-containing particles, the ink may be subjected to a sonification process.

Step 430a shows that nanotubes may then be added to the ink. After the addition of the nanoparticles, the ink may again be subjected to a sonification process. The basic graphene ink in combination with the particles and the nanotubes form a modified graphene ink as indication in block 440a. The modified graphene ink may be in the form of a suspension.

It is noted that, in one or more embodiments, it is possible that the nanotubes may be added before adding the metal-containing particles.

Step 450a shows that the modified graphene ink may then be printed. The modified ink may be printed over or directly onto an electrode structure.

Step 460a shows that, after the ink is printed, it may then be dried so that essentially only the composite material remains without the solvent (e.g. the solvent is evaporated).

Step 470a shows that the composite material may undergo a thermal treatment (e.g. thermal energy may be applied) so as to remove any residuals of the solvent.

Fig. 4e shows another embodiment of a process for making a composite material as described herein. Step 410b shows that a basic graphene ink may be provided. The basic graphene ink may include a graphene material in a solvent. As already mentioned, the solvent may be an organic solvent such as N-Methylpyrrolidone or ethylene glycol.

Step 420b shows that a metal salt may be added to the basic graphene ink. The added metal salt may be a metal acetate such a palladium acetate and/or platinum acetate.

Step 430b shows that nanotubes may then be added to the ink. After the addition of the nanoparticles, the ink may be subjected to a sonification process. The basic graphene ink in combination with the metal salt and the nanotubes form a modified graphene ink as indicated in step 440b. The modified graphene ink may be in the form of a suspension.

Step 450b shows that the modified graphene ink may then be printed. The modified ink may be printed over or directly onto an electrode structure.

Step 460b shows that, after the ink is printed, it may then be dried. The drying of the ink may essentially evaporated the solvent.

Step 470b shows that, after the ink is dried, the remaining material may be subjected to a thermal process which applies thermal energy. The thermal energy may form the metal-containing particles (e.g. metal-containing nanoparticles). Hence, with the application of the thermal energy, the composite material may be formed. The application of the thermal energy may also help to evaporate any of the remaining residual solvent material.

The carbon nanotubes which are added to the graphene material (for example, graphene flakes) may serve to increase the gas sensitivity of the composite material, for example, because of one or more of the follow reasons:
- The surface area of the composite material may be increased.
- The surface of the carbon nanotubes may have a higher reactivity compared to graphene due to the curvature and the resulting strain.
- A higher loading with metal-containing material (such as metal-containing particles such as nanoparticles) may be possible.
- Graphene flakes having carbon nanotubes in between the flakes may create a more stable dispersion that may lead to a better layer formation with improved charge transport;
- The surface energy of the carbon nanotubes may better match the gas to be detected (such as CO) than the graphene material alone.
- The addition of carbon nanotubes in the composite material may improve the sensitivity of the composite material.

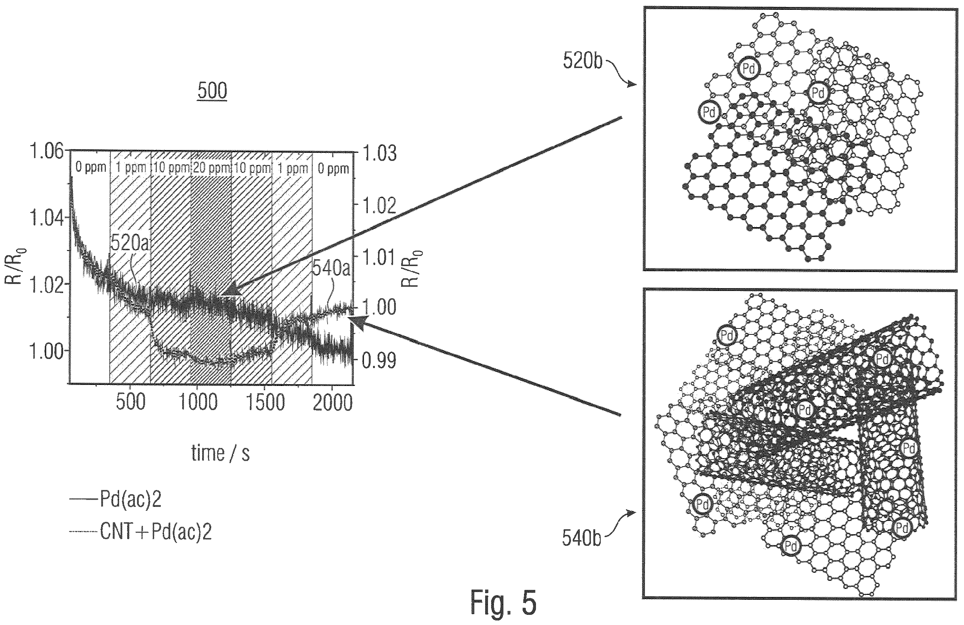

Fig. 5 shows a diagram 500 that includes two curves 520a and 540a. Curve 520a is the relative resistance R/Ro of a first material 520b as a function of gas concentration in ppm. Curve 540a is the relative resistance R/Ro of a second material 540b as a function of gas concentration in ppm. The first material 520b includes a graphene material and metal-containing particles (such as metal-containing nanoparticles). The second material 540b includes the graphene material, particles and additionally the carbon nanotubes. The metal-containing particles shown in the diagram 500 include the metal element Pd (palladium), however it is understood that the discussion applies for other metal elements as well. The relative resistance R/Ro represents the resistance R of the material after gas adsorption divided by the resistance Ro of the material before gas adsorption.

The diagram 500 shows that as time increases (bottom abscissa) the gas concentration in ppm (top absicissa) of the target gas (gas to be detected) increases from 0 ppm to 20 ppm in the first half of the total time period shown and decreases from 20 ppm to 0 ppm in the second half of the total time period shown.

The graph 500 shows that the second material 540b with carbon nanotubes is generally more sensitive than that of the first material 520b without carbon nanotubes to changes in target gas concentration. Referring to graph 500 of Fig. 5, the slope of the curve 540a corresponding to the material 540b with carbon nanotubes reverses as the concentration of the gas to be detected decreases. The slope is first negative and then become positive. On the other hand, the slope of curve 520a corresponding to a material 520b without carbon nanotubes stays generally negative.

Another aspect of the present invention may be a chemoresistive multi-gas sensor. The multi-gas sensor includes a first gas sensor and at least one additional gas sensor (for example, it may include a plurality of additional gas sensors). The first gas sensor includes a first composite material and a first electrode structure. Each additional gas sensor may include an additional composite material (or some other gas sensing material that may not be a composite material) and an additional electrode structure. It is possible that each gas sensor has a different heating structure. It may also be possible that all of the gas sensors share a common heating structure. Likewise, it is possible that all of the gas sensors are formed over a common substrate (for example, a common semiconductor substrate such as a common silicon substrate). Hence, the multi-gas sensor may be able to detect the presence or concentration of more than one target gases in order to measure multiple gases. Or the multi-gas sensor may be able to detect complex gases. For example, more than one chemoresistive gas sensor may be used to detect different components of a complex gas.

As a multi-gas sensor, it may measure the concentration of more than one gases. In an embodiment, the multi-gas sensor may detect one gas per gas sensor.

An exemplary use case of the multi-gas-sensor may be a MEMS-device comprising a plurality of surfaces, e.g. two, three or four surfaces, deposited with different inks made of different composite materials. Due to this adsorption of the gases on the surfaces the interactions modify the resistance of the conducting composite layer. The signal of the sensor is defined by the changes in the resistance of the chemoresistive gas sensor. Due to the diverse materials and/or surfaces signals and/or signal patterns are provided. Algorithms may enable to read out these sensor signals combined. This may enable to detect concentrations of components of a gas mixture parallel wise. Furthermore, it may also enable to target or to detect complex gases with more than one chemoresistive gas sensors parallel.

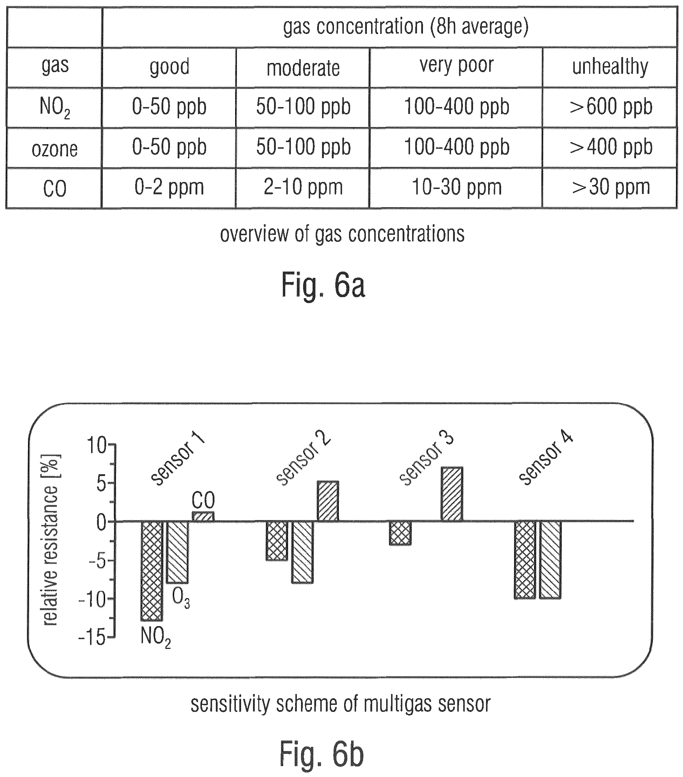

Fig. 6 shows an exemplary use case for a multi-gas sensor in accordance with embodiments. Fig. 6a shows an overview table of gas concentrations used in the air quality index. The table shows good, moderate, very poor and unhealthy ranges of concentrations of NO₂, ozone and CO. The multigas sensor may comprise, for example, 4 chemoresistive gas sensors in order to detect NO₂, O₃, CO gases. Any other number of chemoresistive gas sensors may be arranged. The chemoresistive gas sensors may comprise same properties in view of target media and/or concentrations, e.g., to allow reference measurements, but may also be formed so as to comprise different sensitivities in view of media to be detected and/or concentrations thereof.

Fig. 6b shows a schematic diagram about the signals of a multi-gas sensor with four chemoresistive gas sensors targeting the gases NO₂, ozone and CO. For example, one chemoresistive gas sensor may comprise a CO-sensitive composite material, in order to improve the system or the multi-gas sensor to detect CO gas in a low ppm-range. Other chemoresistive gas sensors of the multi-gas sensor may target other gases. Using the relative resistance values of the chemoresistive gas sensors of the multi-gas sensor, the concentrations of the gases NO₂, ozone and CO may be calculated.

The used chemoresistive gas sensors may have a different sensitivity for different target gases. From a combination of the different signals or relative resistances of the different chemoresistive gas sensors, the concentrations of the different target gases may be calculated. For example, if the relative resistance of sensor 3 is 0% and the relative resistance of sensor 4 is higher than 0%, that may mean, that the measured relative resistance of sensor 4 only relates to the concentration of O₃. Another example may be, if sensor 4 shows no relative resistance (0%), that may mean, that the relative resistance values measured by the other sensors, sensor 1-3, may be associated with the concentration of the CO-gas. That is, according to an embodiment, a method comprises adsorbing the gas to the composite material of the chemoresistive gas sensor and measuring electrical properties of the composite material using the electrode structure of the chemoresistive gas sensor in order to detect a change in the electrical properties of the composite material caused by the adsorption of the gas.

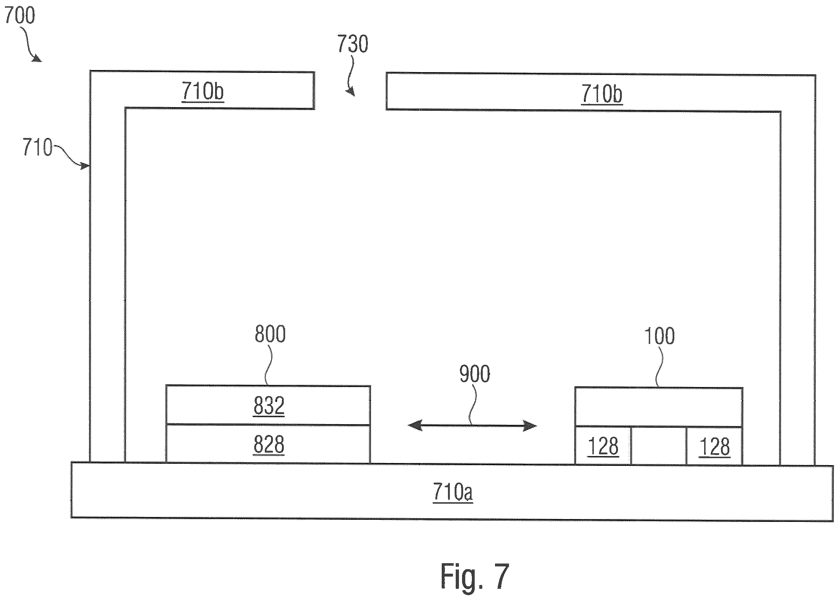

Fig. 7 shows an embodiment of a chemoresistaive gas sensor system 700 of the present invention. The gas sensor system 700 includes a gas sensor 100. The gas sensor system 700 further includes an integrated circuit 800. The integrated circuit 800 may be an application specific integrated circuit (e.g. an ASIC). The integrated circuit 800 may include, for example and without limitation, logic circuitry and/or control circuitry and/or signal processing circuitry and/or microprocessor circuitry and/or memory. The integrated circuit 800 may be electrically coupled to the gas sensor 100. The electrical coupling between the integrated circuit 800 and the gas sensor 100 may be through the package substrate 710. Also, the electrical coupling between the integrated circuit 800 and the gas sensor 100 may be through wires from the integrated 800 to the gas sensor 100.

Hence, the integrated circuit 800 may be in electrical communication with the gas sensor 100. This electrical communication is shown as double arrow 900. In one or more embodiments, the electrical communication 900 may be in both directions. However, in one or more embodiments, the electrical communication 900 may be in only one direction such as from the gas sensor to the integrated circuit 800 or from the integrated circuit 800 to the gas sensor 100.

The gas sensor system may include a package 710. The package 710 may include a package substrate 710a. The package substrate 710a may be a pvc substrate. The substrate 710a may include one or more conductive traces. Hence, the gas sensor may be electrically coupled to the integrated circuit 800 through, for example, one or more (or a plurality of) traces in the package substrate 710a. The package substrate may be a mutli-layer pvc substrate.

The gas sensor 100 as well as the integrated circuit 800 may be disposed over (or directly on) the package substrate 710a. Hence, the gas sensor 100 and/or the integrated circuit 800 may be electrically coupled to the package substrate 710a.

The package 710 may include a package lid 710b. The lid 710b may comprise a conductive material such as a metallic material. The lid 710b may comprise a non-conductive material such as a plastic material. The lid 710b may be attached to the package substrate 710a. In an embodiment the lid 710b and the package substrate 710a may be separate pieces that are attached together. In another embodiment, the lid 710b and the package substrate 710a may be a single (e.g. one-piece) unit.

In the embodiment shown in Fig. 7, the gas sensor 100 and the integrated circuit 800 have separate substrates (e.g. semiconductor substrate or silicon substrates) 128 and 828, respectively. In one or more embodiments, it is also possible that the gas sensor 100 and the integrated circuit 800 shared a common substrate (which may be a semiconductor substrate such as a silicon substrate).

In the embodiment shown in Fig. 7, the package 710 has a gas port 730 in the top of the lid 710b. The gas port 730 may include an opening 730. It is also possible that the gas port may also include some form of filter covering the opening. In one or more embodiments, the package 710 may have a gas port in a sidewall of the lid 710b. In one or more embodiments, the package 710 may have a gas port in the package substrate 710a.

While not shown in Fig. 7, it is possible that the package 710 includes some type of connection means attached to the bottom of the package substrate 710a. For example, the connection means could be a plurality of solder balls or solder pads which may be attached to the bottom of the substrate 710a.

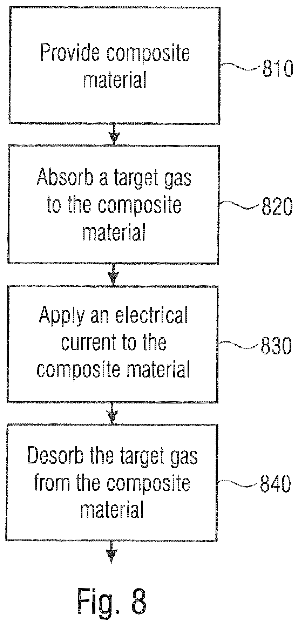

Yet another aspect of the present invention is a method of detecting a gas using a composite material as described herein. An embodiment of a method for detecting a gas is shown in Fig. 8. In step 810 of the method a composite material is provided. The composite material may include, as described herein, a graphene material, a metal-containing material and a carbon nanotube material. The composite material may be, without limitation, any of the composite materials described herein. The composite material may be provided by forming the material and/or the composite material may be provided by obtaining the material.

In step 820 of the method, the target gas is adsorbed to the composite material. The adsorption may include physical adsorption and/or chemical adsorption. In one or more embodiments, the adsorption includes both physical adsorption and/or chemical adsorption.

In step 830, an electrical current is applied to the material. For example, an electrical current may be applied using an electrode structure which may include at least a first and a second electrode. By applying a voltage between the first and the second electrode, an electrical current may be applied to the composite material. By applying an electrical current, a resistance of the composite material may be measured.

In step 840, the target gas may be desorbed from the composite material. The target gas may be desorbed by applying an energy to the composite material. The energy may be a thermal energy. The application of the thermal energy may raise the temperature of the composite material so as to cause the composite material to desorb the target gas. In one or more embodiments, the applied energy may include at least one energy pulse. In one or more embodiments, the applied energy may include a plurality of energy pulses. In one or more embodiments, the applied thermal energy may include at least one thermal energy pulse. In one or more embodiments, the applied thermal energy may include a plurality of thermal energy pulses. In one or more embodiments, the applied energy may be some other form of energy such as electromagnetic energy. In one or more embodiments, the applied energy may be infrared energy.

One or more embodiments relate to a composite material (200), comprising:
a graphene material (210);
a carbon nanotube material (220); and
a metal-containing material (230) including at least one metal element.

One or more embodiments relate to:
a chemoresistive gas sensor (100), comprising:
a composite material, the composite material including:
   a graphene material (210),
   a carbon nanotube material (220), and
a metal-containing material (230) including at least one metal element; and an electrode structure electrically coupled to the composite material.

One or more embodiments relate to:
a chemoresistive gas sensing system, comprising:
a chemoresistive gas sensor(100), comprising:
   a composite material including:
   a graphene material (210),
   a carbon nanotube material (220), and
   a metal-containing material (230) including at least one metal element; and
an electrode structure electrically coupled to the composite material; and an integrated circuit (800) electrically coupled to the chemoresistive gas sensor (100).

One or more embodiments relate to:
a method for manufacturing a chemoresistive gas sensor, the method comprises:
forming an ink material including a composite material, the composite material including:
a graphene material (210),
a carbon nanotube material (220), and
a metal-containing material (230) including at least one metal element; and printing the ink material.

One or more embodiments relate to:
a method of detecting a gas, comprising:
providing a composite material including:
   a graphene material (210),
   a carbon nanotube material (220), and
   a metal-containing material (230) including at least one metal element. adsorbing the gas to the composite material; and
desorbing the gas from the composite material.

Embodiments of the invention relate to:
Embodiment 1:
   1. A composite material (200), comprising:
   a graphene material (210);
   a carbon nanotube material (220); and
   a metal-containing material (230) including at least one metal element.
Embodiment 2:
   2. The composite material according to embodiment 1, wherein the composite material has a minimum composition mass ratio of graphene material to carbon nanotube material of 1:0.005 and a maximum composition mass ratio of 1:0.5.
Embodiment 3:
   3. The composite material according to any of the embodiments 1 to 2, wherein the composite material has a minimum composition mass ratio of graphene material to the metal-containing material of 1:1 and a maximum composition mass ratio of 1:20.
Embodiment 4:
   4. The composite material according to any of embodiments 1 to 3, wherein the composite material has
   a minimum composition mass ratio of graphene material to carbon nanotube material of 1:0.005 and a maximum composition mass ratio of 1:0.5, and
   a minimum composition mass ratio of graphene material to metal containing material of 1:1 and a maximum composition mass ratio of 1:20.
Embodiment 5:
   5. The composite material according to any of embodiments 1 to 4, wherein the metal-containing material (230) is homogeneously distributed in the composite material (200).
Embodiment 6:
   6. The composite material according to any of embodiments 1 to 5, wherein the at least one metal element includes at least one noble metal element.
Embodiment 7:
   7. The composite material according to any of embodiments 1 to 6, wherein the metal-containing material includes a pure metal and/or an alloy and/or a metal-containing compound.
Embodiment 8:
   8. The composite material according to any of embodiments 1 to 7, wherein the metal-containing material includes a metallic material.
Embodiment 9:
   9. The composite material according to any of embodiments 1 to 8, wherein the metal-containing material includes a non-metallic material.
Embodiment 10:
   10. The composite material according to any of embodiments 1 to 9, where the metal-containing compound includes a metal chalcogenide.
Embodiment 11:
   11. The composite material according to embodiment 10, wherein the metal-containing compound includes a metal oxide.
Embodiment 12:
   12. The composite material according to any of embodiments 1 to 11, wherein the metal-containing material is in direct contact with the graphene material and/or with the carbon nanotubes.
Embodiment 13:
   13. The composite material according to any of the embodiments 1 to 12, wherein the graphene material comprises graphene-flakes.
Embodiment 14:
   14. The composite material according to any of embodiments 1 to 13, wherein the metal-containing material comprises a plurality of particles.
Embodiment 15:
   15. The composite material according to embodiment 14, wherein the plurality of particles comprises a plurality of nanoparticles.
Embodiment 16:
   16. The composite material according to embodiment 14, wherein the plurality of particles has a particle size less than or equal to 150 nanometers.
Embodiment 17:
   17. A chemoresistive gas sensor (100), comprising:
   the composite material according any of embodiments 1 to 16; and
   an electrode structure electrically coupled to the composite material (200).
Embodiment 18:
   18. The chemoresistive gas sensor (100) according to embodiment 17, further comprising a heating element (124a) thermally coupled to the composite material (200).
Embodiment 19:
   19. The chemoresistive gas sensor (100) according to embodiment 18, further comprising a heat distribution element (124b) thermally coupled to the heating element (124a).
Embodiment 20:
   20. The chemoresistive gas sensor (100) according to any of embodiments 17 to 19, wherein the chemoresistive gas sensor is a multigas sensor including at least one additional gas-sensing material and at least one additional electrode structure, each of the at least one additional gas-sensing material electrically coupled to a corresponding one of the at least one additional electrode structure.
Embodiment 21:
   21. The chemoresistive gas sensor (100) according to embodiment 20, wherein the at least one additional gas-sensing material includes at least one additional composite material.
Embodiment 22:
   22. A chemoresistive gas sensing system, comprising:
   the chemoresistive gas sensor of embodiments 17 to 21; and
   an integrated circuit (800) electrically coupled to the chemoresistive gas sensor (100).
Embodiment 23:
   23. A method for manufacturing a chemoresistive gas sensor, wherein the method comprises:
   forming an ink material including a composite material according to any of embodiments 1 to 16; and
   printing the ink material.
Embodiment 24:
   24. The method according to embodiment 23, further comprising:
   after printing the ink material, removing a solvent from the ink material.
Embodiment 25:
   25. A method of detecting a gas, comprising:
   providing a composite material according to any of the embodiments 1 to 16;
   adsorbing the gas to the composite material; and
   desorbing the gas from the composite material.
Embodiment 26:
   26. A method of detecting a gas according to embodiment 25, comprising:
   after adsorbing the gas and before desorbing the gas, measuring an electrical property of the composite material.
Embodiment 27:
   27. The method according to embodiment 25, wherein the step of desorbing the gas from the composite material includes applying an energy to the composite material.
Embodiment 28:
   28. The method of embodiment 25, further comprising:
   after adsorbing the gas and before desorbing the gas, applying an electrical current to the composite material.
Embodiment 29:
   29. The method of embodiment 27, wherein the energy includes thermal energy.
Embodiment 30:
   30. The method of embodiment 28, wherein the thermal energy includes a plurality of thermal energy pulses.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

While this disclosure has been described with reference to illustrative embodiments, this description is not intended to be construed in a limiting sense. Various modifications and combinations of the illustrative embodiments, as well as other embodiments of the disclosure, will be apparent to person skilled in the art upon reference to the description. It is therefore intended that the appended claims encompass any such modifications or embodiments.

## Claims

1. A composite material (200), comprising:
a graphene material (210);
a carbon nanotube material (220); and
a metal-containing material (230) including at least one metal element.

2. The composite material according to claim 1, wherein the composite material has a minimum composition mass ratio of graphene material to carbon nanotube material of 1:0.005 and a maximum composition mass ratio of 1:0.5.

3. The composite material according to any of the claims 1 to 2, wherein the composite material has a minimum composition mass ratio of graphene material to the metal-containing material of 1:1 and a maximum composition mass ratio of 1:20.

4. The composite material according to any of claims 1 to 3, wherein the metal-containing material includes a pure metal and/or an alloy and/or a metal-containing compound.

5. The composite material according to claim 4, wherein the metal-containing compound includes a metal oxide.

6. The composite material according to any of claims 1 to 5, wherein the metal-containing material includes a metallic material.

7. The composite material according to any of the claims 1 to 6, wherein the graphene material comprises graphene-flakes.

8. The composite material according to any of claims 1 to 7, wherein the metal-containing material includes a plurality of nanoparticles.

9. A chemoresistive gas sensor (100), comprising:
the composite material according any of claims 1 to 8; and
an electrode structure electrically coupled to the composite material (200).

10. The chemoresistive gas sensor (100) according to claim 9, further comprising a heating element (124a) thermally coupled to the composite material (200).

11. A chemoresistive gas sensing system, comprising:
the chemoresistive gas sensor of claim 9 or 10; and
an integrated circuit (800) electrically coupled to the chemoresistive gas sensor (100).

12. A method for manufacturing a chemoresistive gas sensor, wherein the method comprises:
forming an ink material including a composite material according to any of claims 1 to 8; and
printing the ink material.

13. The method according to claim 12, further comprising:
after printing the ink material, removing a solvent from the ink material.

14. A method of detecting a gas, comprising:
providing a composite material according to any of the claims 1 to 8;
adsorbing the gas to the composite material; and
desorbing the gas from the composite material.

15. A method of detecting a gas according to claim 14, comprising:
after adsorbing the gas and before desorbing the gas, measuring an electrical property of the composite material.
